# EUROPÄISCHE PATENTANMELDUNG

(11) **EP 3 299 148 A1**
(43) Veröffentlichungstag der Anmeldung: **28.03.2018**
(21) Anmeldenummer: 17190305.7
(22) Anmeldetag: 11.09.2017
(51) Int. Cl.: B29C 65/78, B29C 33/30, F03D 1/06, B29C 65/48

(54) **FEINZENTRIERUNG FÜR VORDERKANTENKLEBELIPPENFORM**

(30) Priorität: 22.09.2016 DE 102016011450
(71) Anmelder: Senvion GmbH, 22297 Hamburg (DE)
(72) Erfinder: BENDEL, Urs, 24787 Fockbek (DE); WERNER, Markus, 24242 Felde (DE); RAMM, Julian, 24105 Kiel (DE); ZELLER, Lenz, 24242 Felde (DE)
(74) Vertreter: Groth, Wieland

(57) **Zusammenfassung**

Fertigungsform eines Rotorblattes einer Windenergieanlage, mit einer Formhalbschale (3) und einer anderen Formhalbschale (6) und mindestens einer Zentriereinrichtung (1) mit einem Zentrierstück (2) und einem korrespondierenden Zentrierstück (4), von denen das eine Zentrierstück (2) an der einen Formhalbschale (3) und das korrespondierende Zentrierstück (4) an der anderen Formhalbschale (6) oder umgekehrt angeordnet sind, und einer Klebelippenform (30) mit einem weiteren Zentrierstück (31), das während der Fertigung einer Rotorblatthalbschale (43, 46) an der einen Formhalbschale (3) zeitweise angeordnet ist und dabei das weitere Zentrierstück (31) und das korrespondierende Zentrierstück (4) zusammenwirken.

## Beschreibung

Die Erfindung betrifft eine Fertigungsform eines Rotorblattes einer Windenergieanlage. Die Erfindung betrifft auch ein Verfahren zur Fertigung eines Rotorblattes einer Windenergieanlage.

Fertigungsformen zur Fertigung von Rotorblättern sind im Stand der Technik natürlich bekannt. Dabei werden Rotorblätter durch Zusammenfügen zweier Rotorblatthalbschalen hergestellt. Die Rotorblatthalbschalen werden separat voneinander in Formhalbschalen jeweils in einem Verfahren gefertigt, in dem die Faserhalbzeuge durch Laminieren, Infusionieren oder durch die Verwendung von Prepregs mit Harz getränkt und ausgehärtet werden. Nach dem Aushärten der Rotorblatthalbschalen werden die Formhalbschalen aufeinandergeklappt, dabei wird üblicherweise die zur Herstellung der saugseitigen Rotorblatthalbschale verwendete saugseitige Halbschalenform über die positionsfest verbleibende druckseitige Halbschalenform mittels eines Schwenkmechanismus verschwenkt.

Moderne Rotorblätter weisen Längen von 70 m und mehr auf, die entsprechenden Formhalbschalen weisen daher ebenfalls Längen von deutlich über 70 m auf. Beim Aufeinanderschwenken der beiden Formhalbschalen müssen die Rotorblatthalbschalen positionsgenau übereinander positioniert sein, um ein Verkleben der beiden Rotorblatthalbschalen zu ermöglichen. Zur exakten Positionierung der Formschalen zueinander sind sogenannte Zentriereinrichtungen vorgesehen, die aus einem männlichen, stiftartigen Zentrierstück und einem weiblichen, pfannenartigen Zentrierstück bestehen, die beim Ausrichten der beiden Formhalbschalen zueinander zusammenwirken und durch das Eigengewicht der Formschalen und evtl. zusätzliche äußere Kräfte eine exakte Positionierung der beiden Formhalbschalen zueinander gewährleisten. Dazu müssen die Zentriereinrichtungen vorab natürlich genau eingestellt werden.

Selbst bei einer positionsgenauen Zentrierung der Rotorblatthalbschalen übereinander, hat sich gezeigt, dass eine Verklebung lediglich anhand der frontal aufeinanderliegenden Rotorblatthalbschalenränder eine sehr geringe und teilweise zu geringe Klebfläche zur Verfügung stellt, um eine dauerhafte und feste Verklebung zu gewährleisten.

Daher ist es ebenfalls bekanntermaßen vorgesehen, an einer der beiden Rotorblatthalbschalen entlang der Nase eine sogenannte Klebelippe bereits während der Herstellung der jeweiligen der Rotorblatthalbschale integral mit der Rotorblatthalbschale auszubilden. Die Klebelippe wird innenseitig an die andere Rotorblatthalbschale angeklebt, wenn die beiden Rotorblatthalbschalen mit Hilfe der Formen, in denen sie sich dann noch befinden, zueinander positioniert und miteinander verklebt werden. Dadurch vergrößert sich die Klebfläche zwischen beiden Rotorblatthalbschalen an der Profilvorderkante erheblich.

Bei dem durch den Stand der Technik bekannten Verfahren wird die Klebelippenform soweit in Richtung Hinterkante des Blattes verschoben, wie es der Gesamtdicke der gegenüberliegenden Blattschale an der Vorderkante entspricht, plus der gewünschten Klebedicke. Dieses Verfahren führt zu großen Steifigkeitssprüngen am Ende der gegenüberliegenden Blattschale und dazu, dass es an der Blattschale mit der integrierten Klebelippe entweder ebenfalls zu einem großen Steifigkeitssprung kommt, wenn die Schalenlagen alle in der Trennebene enden und die Lagen für die Klebelippe als separate Lagen eingelegt werden oder zu einer großen Umlenkung und Krümmung der Faserlagen, wenn die Schalenlagen in die Klebelippe verlängert werden.

Aufgabe der Erfindung ist es daher, eine Fertigungsform eines Rotorblattes einer Windenergieanlage sowie ein Fertigungsverfahren für ein Rotorblatt zur Verfügung zu stellen, die bzw. das in der Lage sind, die oben genannten Nachteile zu vermeiden.

Die Aufgabe wird in ihrem ersten Aspekt durch eine eingangs genannte Fertigungsform mit den Merkmalen des Anspruchs 1 erreicht.

Die erfindungsgemäße Fertigungsform weist eine Formhalbschale und eine andere Formhalbschale auf und mindestens eine Zentriereinrichtung mit einem Zentrierstück und einem korrespondierendem Zentrierstück auf, von denen das eine Zentrierstück an der einen Formhalbschale und das korrespondierende Zentrierstück an der anderen Formhalbschale oder umgekehrt angeordnet sind. Die Fertigungsform weist darüber hinaus eine Klebelippenform mit einem weiteren Zentrierstück auf, das während der Fertigung einer Rotorblatthalbschale an der zugehörigen Formhalbschale zeitweise angeordnet ist, wobei das weitere Zentrierstück der Klebelippenform und das korrespondierende Zentrierstück der anderen Formhalbschale zusammenwirken.

Die erfindungsgemäße Klebelippenform macht sich damit die an der Formhalbschale und der anderen Formhalbschale ohnehin angeordnete Zentriereinrichtung anderweitig zu Nutze, indem eines der beiden Zentrierstücke zu Montage der Klebelippenform verwendet wird. Das an der Klebelippenform angeordnete weitere Zentrierstück wirkt zeitweise mit dem korrespondierenden Zentrierstück während der Fertigung der Rotorblatthalbschale zusammen.

Grundsätzlich ist hier unter einer Rotorblatthalbschale bzw. Formhalbschale eine Anordnung zu verstehen, die einen Teil des Rotorblattes ausbildet. Dabei kann es sich um exakt eine Hälfte eines Rotorblattes handeln; es ist jedoch auch denkbar, dass ein kleinerer oder größerer Teil des Rotorblattes durch eine Formhalbschale gefertigt wird. Es ist auch denkbar, dass sogar lediglich ein Abschnitt oder Streifen entlang der Rotorblattnase durch eine Formhalbschale gefertigt werden, sodass der Begriff "halb" nicht als "hälftig" zu verstehen ist, sondern auch größere oder kleinere Teile umfassen kann.

Darüber hinaus ist es grundsätzlich offen, ob die Klebelippenform an der einen oder der anderen Formhalbschale zeitweise angeordnet ist. Je nach Anordnung an der Klebelippenform an der einen Formhalbschale oder an der anderen Formhalbschale weist die Klebelippenform ein weiteres Zentrierstück oder ein weiteres korrespondierendes Zentrierstück auf.

Günstigerweise vergrößert die Klebelippenform eine andere Auflagefläche der anderen Formhalbschale in eine Richtung, in der die eine Formhalbschale bei aufeinandergeklappten Formhalbschalen angeordnet ist. Die Klebelippenform ist erfindungsgemäß so gewählt, dass sie entlang eines Randes der anderen Formhalbschale angeordnet ist und die durch die andere Formhalbschale ausgebildete andere Rotorblatthalbschale mit einer Klebelippe versieht, die beim Zusammenfügen der Rotorblatthalbschalen nicht einen Teil der Rotorblattaußenhaut ausbildet, sondern innen hinter die eine Rotorblatthalbschale greift und damit eine vergrößerte Klebfläche zwischen Innenwandung der einen Rotorblatthalbschale und Außenwandung der Klebelippe erzeugt.

Gegenüber dem Stand der Technik ist die Klebelippenform jedoch dadurch, dass sie ein weiteres Zentrierstück aufweist und an dem korrespondierenden Zentrierstück der Formhalbschale angeordnet ist und mit ihm zusammenwirkt, besonders exakt zu positionieren. Es ist dadurch möglich, die Klebelippe unmittelbar am anderen Formhalbschalenrand derart auszubilden, dass die Klebelippe unmittelbar am gegenüberliegenden Halbschalenrand der gegenüber liegenden Blatthalbschale nach innen, in die Blatthalbschale hinein, versetzt angeordnet ist und sich dadurch ein sehr gut definierter und gleichmäßiger Klebespalt ergibt. Die Auflagefläche der Klebelippenform, welche die Verklebung der Blattschalen an der Profilvorderkante begrenzt, ist also nicht exakt bündig mit der Auflagefläche der anderen Formhalbschale ausgebildet, sondern ein Stück weit nach innen versetzt, wobei die erfindungsgemäße Ausführung den Versatz unmittelbar an der Profilvorderkante gegenüber dem Stand der Technik durch das Versetzen der Enden der Schalenlagen auf ein Minimum reduziert wird und so die oben beschriebenen Nachteile vermieden werden. Durch die erfindungsgemäße Anordnung der Klebelippenform an der Zentriereinrichtung ist es erst möglich, diese sehr präzise Ausbildung des Versatzes entlang der gesamten Rotorblattnase zu ermöglichen.

Günstigerweise weist die Klebelippenform wenigstens einen Magneten zur Fixierung der Klebelippenform auf dem Rand der anderen auf. Die bekannten Zentriereinrichtungen zeichnen sich insbesondere dadurch aus, dass sie eine Zentrierung in der Profiltiefenrichtung ermöglichen. Durch das Einsetzen der Klebelippenform mittels eines weiteren Zentrierstückes in das korrespondierende Zentrierstück, bleibt auch die Klebelippenform grundsätzlich entlang der Vertikalen frei beweglich. Lediglich die Beweglichkeit in der Profiltiefenrichtung ist fixiert und ermöglicht die genaue Positionierung der Klebelippenform relativ zum anderen Formhalbschalenrand. Um auch die Beweglichkeit in der Vertikalen zu fixieren, sind Magneten vorgesehen, die integral mit der Klebelippenform ausgebildet sind und die an der metallischen anderen Formhalbschale zeitweise fixiert werden können.

Die Zentriereinrichtungen können unterschiedlich ausgebildet sein, vorzugsweise ist das Zentrierstück wannenförmig ausgebildet und das korrespondierende Zentrierstück stiel- oder stiftförmig ausgebildet oder umgekehrt, es sind noch andere Ausbildungen zweier korrespondierender Zentrierstücke denkbar, die eine Positionierung der beiden Bauteile beim Ineinanderfügen der beiden Zentrierstücke ermöglichen. Günstigerweise handelt es sich dabei zum einen um eine konisch ausgeformte Pfanne und zum anderen um einen entsprechend konisch spitz zulaufenden Stift.

Die Aufgabe wird in ihrem zweiten Aspekt durch ein eingangs genanntes Verfahren mit den Merkmalen des Anspruchs 7 erfüllt.

Das erfindungsgemäße Verfahren eignet sich insbesondere zu Durchführung mit einer der oben genannten Fertigungsformen.

Erfindungsgemäß werden eine und eine andere Formhalbschale zur Verfügung gestellt, eine Klebelippenform wird mit einem weiteren Zentrierstück an einem korrespondierenden Zentrierstück wenigstens einer Zentriereinrichtung an der anderen Formhalbschale angeordnet und darin eine andere Rotorblatthalbschale mit einer Klebelippe gefertigt. Eine Formhalbschale wird zur Verfügung gestellt und eine Rotorblatthalbschale in der Formhalbschale gefertigt, die Klebelippenform von der anderen Formhalbschale entfernt und die beiden Formhalbschalen werden zusammengefügt, und die Klebelippe der anderen Rotorblatthalbschale hintergreift eine Rotorblatthalbschale innen entlang der vorzugsweise gesamten Rotorblattnase.

Vorzugsweise werden Schalenlagen beider Rotorblatthalbschalen an der Nase zur Trennebene hin versetzt gelegt, sodass sich eine Art Schäftung ergibt und die Rotorblatthalbschalen mit jeweils deutlich weniger Schalenlagen an der Trennebene enden, als es ihrer Anzahl in einem im Querschnitt mittleren Bereich entspricht. Die Rotorblatthalbschalen werden zur Nase hin zunächst dünner gefertigt.

Das erfindungsgemäße Verfahren zeichnet sich dadurch aus, dass die Klebelippenform mittels eines weiteren Zentrierstückes, das an der Klebelippenform angeordnet ist, in das an der anderen Formhalbschale ohnehin vorhandene korrespondierende Zentrierstück der wenigstens einen Zentriereinrichtung eingreift oder mit ihm zusammenwirkt.

Die Klebelippenform dient zur Ausbildung der Klebelippe der anderen Rotorblatthalbschale.

Gegenüber bekannten Herstellungsverfahren ist das erfindungsgemäße Verfahren deutlich präziser, da die Klebelippe, durch die Zentriervorrichtung, welche hochpräzise gefertigt und eingestellt werden kann, entlang des anderen Formhalbschalenrandes positioniert wird.

Nach Entfernen der Klebelippenform und dem Fertigen der beiden Rotorblatthalbschalen werden die Formhalbschale und die anderen Formhalbschale zusammengefügt, und dabei wirken die Zentrierstücke und die korrespondierenden Zentrierstücke der Zentriereinrichtung zusammen und positionieren die Formhalbschalen exakt zueinander.

Die Zentriereinrichtung hat damit gegenüber dem Stand der Technik zwei Funktionen: Zum einen die Klebelippenform exakt zu positionieren und zum anderen nach Entfernen der Klebelippenform nach wie vor die beiden Formhalbschalen zueinander exakt zu positionieren.

In einer besonders vorteilhaften Ausbildung der erfindungsgemäßen Konfiguration wird das Zentrierstück als einstellbarer, männlicher, im Wesentlichen stiftförmiger Teil der Zentriervorrichtung in der Klebelippenform platziert, und das wannenartige, nicht einstellbare, weibliche korrespondierende Zentrierstück wird im Rand der anderen Formhalbschale platziert. Dementsprechend wird im Rand der einen Formhalbschale das Zentrierstück als ebenfalls einstellbares, männliches, im Wesentlichen stiftförmigen Teil, korrespondierend platziert.

Vorzugsweise wird die Klebelippenform mit einem stiftartigen weiteren Zentrierstück in ein wannenförmiges Zentrierstück eingebracht und mit Magneten an der Formhalbschale zusätzlich befestigt. Durch die Befestigung mit den Magneten wird auch eine Fixierung senkrecht zur Ebene der Formhalbschale ermöglicht, die durch die bekannten Zentriereinrichtungen bisher nicht möglich war.

Die Erfindung wird anhand eines Ausführungsbeispiels in vier Figuren beschrieben. Dabei zeigt
- Fig. 1: eine schematische Schnittansicht einer Zentriereinrichtung,
- Fig. 2: eine schematische perspektivische Ansicht eines saugschalenseitigen Zentrierstücks der Zentriereinrichtung,
- Fig. 3: eine schematische Schnittansicht des saugseitigen Zentrierstücks gemäß Fig. 2 mit der erfindungsgemäßen Klebelippenform,

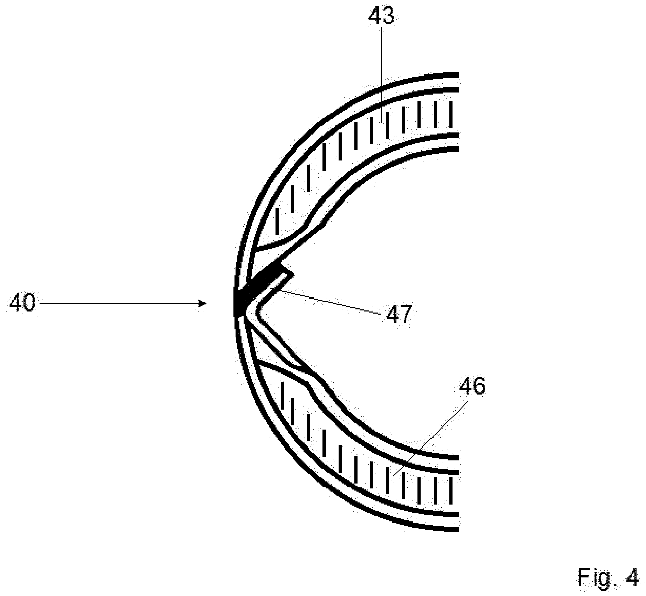

- Fig. 4: eine Nasenverklebung einer saugseitigen und einer druckseitigen Rotorblatthalbschale.

Rotorblattschalen werden mithilfe einer vorzugsweise mehrteiligen Fertigungsform gefertigt. Die Fertigungsform umfasst eine saugseitige Formhalbschale und eine druckseitige Formhalbschale. Üblicherweise sind die beiden Formhalbschalen mittels einer Scharniervorrichtung aufeinanderklappbar. In der druckseitigen Formhalbschale wird die druckseitige Rotorblatthalbschale und in der saugseitigen Formhalbschale wird die sauseitige Rotorblatthalbschale in einem Laminierverfahren gefertigt, indem die Faserhalbzeuge durch Laminieren, Infusionieren oder durch die Verwendung von Prepregs mit Harz getränkt und ausgehärtet werden.

Die vorgefertigten Rotorblatthalbschalen werden durch eine Schwenkbewegung einer der Formhalbschalen übereinandergeschwenkt, sodass die Ränder der Rotorblatthalbschalen direkt aufeinander positioniert sind. Die Ränder werden dann vorzugsweise mit einem Klebstoffsystem zusammengeklebt.

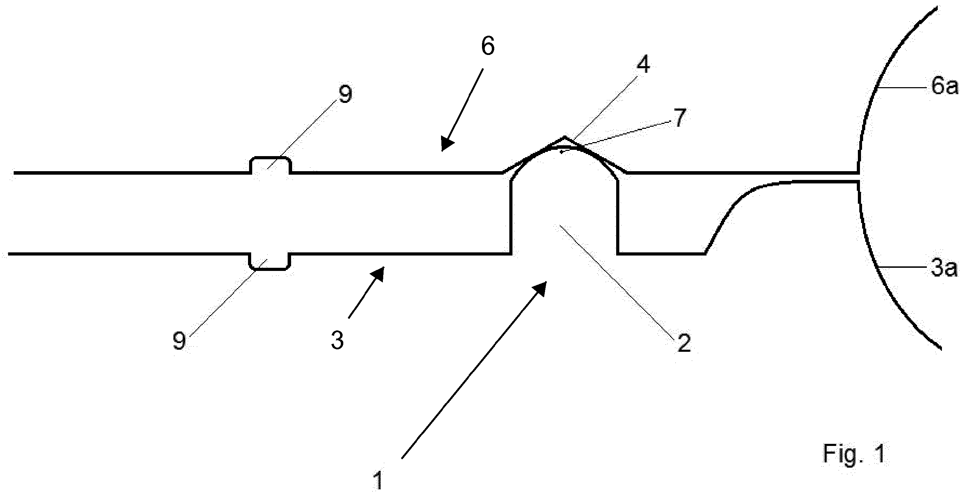

Fig. 1 zeigt eine Zentriereinrichtung 1 mit einem stiftartigen Zentrierstück 2, der mit einer Formhalbschale 3 verbunden ist und einem wannenartigen Zentrierstück 4, das mit einer anderen Formhalbschale 6 verbunden ist. Das stiftartige Zentrierstück 2 und das wannenartige Zentrierstück 4 bilden zusammen eine Zentriereinrichtung 1 aus. Die Zentriereinrichtung 1 ermöglicht es und gewährleistet es, dass die beiden Formhalbschalen 3, 6 beim Zusammenklappen positionsgenau gegeneinander ausgerichtet werden, indem eine Spitze 7 des stiftartigen Zentrierstücks 2 in die etwa komplementär geformte Wanne des wannenartigen Zentrierstückes 4 eingeführt wird und dabei die beiden Zentrierstücke 2 und 4 gegeneinander ausrichtet, sodass eine Auflagefläche 3a der druckseitigen Formhalbschale 3 und eine Auflagefläche 6a der saugseitigen Formhalbschale 6 gemäß Fig. 1 exakt bündig gegeneinander ausgerichtet sind.

Die Formhalbschalen 3, 6 sind in Fig. 1 nach rechts, also der Zentriereinrichtung 1 an den beiden Nasenabschnitten der Auflageflächen 3,a, 6a gegenüberliegend, weit ausgedehnt und voneinander beabstandet, sodass rechts der Zentriereinrichtung 1 vollständige Auflageflächen 3a, 6a für die Rotorblatthabschalen angeordnet sind.

Die beiden Formhalbschalen 3, 6 weisen im zusammengeklappten Zustand gemäß Fig. 1 einen kleinen Spalt 8 von 1 mm bis 3 mm zwischen sich auf, durch den das Klebmittel, das beim Zusammenklappen der beiden nicht eingezeichneten Rotorblatthalbschalen innen- und außenseitig aus dem Rotorblatt herausgedrückt wird, ausweichen kann.

Die Formhalbschalen 3, 6 weisen darüber hinaus Kanalprofile 9 auf, durch die ein Vakuum entlang der Formhalbschalen 3, 6 verteilt werden kann.

Das stiftartige Zentrierstück 2, ist beispielsweise durch eine Reihe von (nicht dargestellten) Schrauben in der Höhe, also in Richtung des wannenartigen Zentrierstückes 4 einstellbar, aber auch in horizontaler Richtung d. h. parallel zum wannenartigen Zentrierstück 4 einstellbar. Nach dem Einstellen behält die Spitze 7 des Zentrierstücks 2 ihre Position relativ zur Formhalbschale 3 bei. Durch exaktes Einstellen ist eine positionsgenaue Anordnung der beiden Zentrierstücke 2, 4 relativ zueinander zu gewährleisten, damit die beiden Auflageflächen 3a, 6a der zugehörigen Formhalbschale 3, 6 entlang der Rotorblattnase exakt miteinander fluchten.

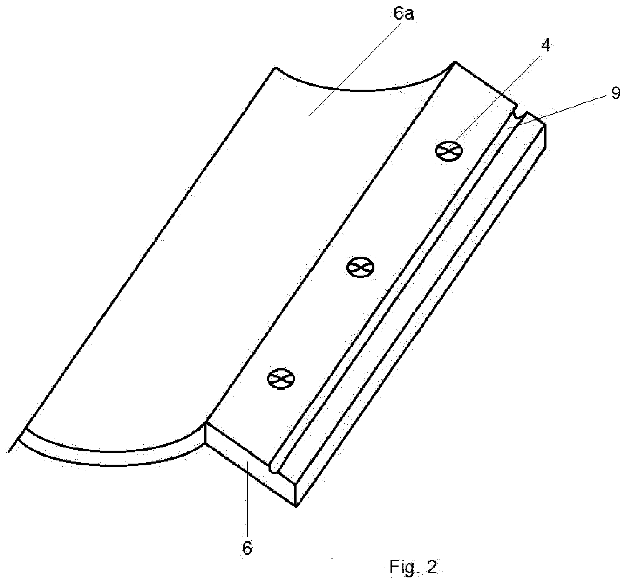

In Fig. 2 ist das wannenartige Zentrierstück 4 an der saugseitigen Formhalbschale 6 in einer perspektivischen Ansicht dargestellt. Die Wanne oder Pfanne, Mulde oder Einbuchtung verjüngt sich und ist bei einem Formhalbschalenrand 6b angeordnet.

Problematisch beim Verkleben der beiden Rotorblatthalbschalen 43, 46 entlang der Rotorblattnase 40 ist, dass die beiden Ränder herkömmlicherweise eine relativ kleine Klebfläche zur Verfügung stellen. Daher wird die andere Rotorblatthalbschale 46 mit einer Klebelippe 47 versehen, d. h. die andere Rotorblatthalbschale 46 wird in Richtung der einen Rotorblatthalbschale 43 länger gefertigt als es für ein frontales Aufeinanderkleben der Ränder der Rotorblatthalbschalen 43, 46 erforderlich wäre.

Die Klebelippe 47 der anderen Rotorblatthalbschale 46 wird innen an der einen Rotorblatthalbschale 43 beim Aufeinanderschwenken der beiden Formhalbschalen 3, 6 vorbeigeschoben, und eine Außenseite der Klebelippe 47 wird an eine Innenseite der einen Rotorblatthalbschale 43 angeklebt.

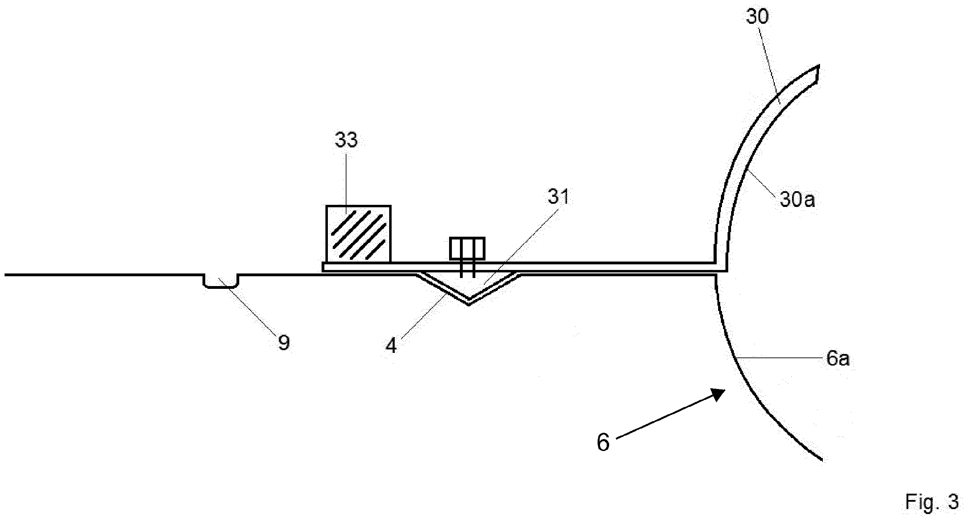

Damit die Rotorblattnase 40 nach dem Verkleben nach Möglichkeit keinen Versatz entlang einer Klebelinie 41 an einer Außenhaut 42 aufweist, ist die druckseitige Formhalbschale 6, gem. Fig. 3, während der Fertigung der anderen Rotorblatthalbschale 46 mit einer Klebelippenform 30 bestückt. Die Klebelippenform 30 ist ein Bauteil, das lediglich während der Fertigung der anderen Rotorblatthalbschale 46 auf dem wannenförmigen Zentrierstück 4 der Zentriereinrichtung 1 der saugseitigen Halbschalenform 6 angeordnet wird und nach der Fertigung der anderen Rotorblatthalbschale 46 wieder von der saugseitigen Formhalbschale 6 entfernt wird, bevor die beiden Formhalbschalen 3, 6 aufeinandergeklappt werden. Die Klebelippenform 30 setzt durch ihre innere Auflagefläche 30a die Auflagefläche 6a der anderen Formhalbschale 6 nach oben hin fort, d. h. in eine Richtung, die im zusammengeklappten Zustand in Richtung der einen Formhalbschale 3 zeigen würde. Die Klebelippenform 30 ermöglicht es, die Rotorblatthalbschale 46 mit der zur Verklebung erforderlichen Lippe 47 zu versehen.

Erfindungsgemäß ist es vorgesehen, dass die Klebelippenform 30 exakt auf einer der Formhalbschalen 3, 6, vorzugsweise auf der anderen Formhalbschale 6, zeitweise positioniert wird, indem die Klebelippenform 30 selbst mit einem weiteren Zentrierstück 31, vorzugsweise einem abgewandelten, stiftartigen Zentrierstück versehen wird, das ebenfalls mit dem wannenförmigen Zentrierstück 4 zusammenwirkt.

Dadurch kann die Zentriereinrichtung 1 bereits während der Fertigung der Rotorblatthalbschalen 43, 46 genutzt werden, um eine genaue Positionierung der Lippe 47 der anderen Rotorblatthalbschale 46 zu ermöglichen.

Günstigerweise weist die Klebelippenform 30 zusätzlich einen oder mehrere in Längsrichtung L angeordnete Magnete 33 auf, die auf den metallisch ausgebildeten Inserts der anderen Formhalbschale 6 angeordnet werden und damit die Klebelippenform 30 zusätzlich in Position halten. Das ist insbesondere deshalb notwendig, weil die Zentriereinrichtung 1 zwar ein Verrutschen in horizontaler Richtung, d. h. in der Ebene der Formhalbschale 6 verhindert, aber kein Verrutschen in senkrechter Richtung, d. h. senkrecht zur Ebene der anderen Formhalbschale 6. Nach der Fertigung der saugseitigen Rotorblatthalbschale 46 wird die Klebelippenform 30 in Fig. 3 von rechts nach links durch eine Schwenkbewegung abgezogen und das stiftartige weitere Zentrierstück 31 aus der Pfanne 4 herausgezogen, und durch eine Hebebewegung werden die Magneten 33 von der anderen Formhalbschale 6 gelöst.

### Bezugszeichenliste

- 1: Zentriereinrichtung
- 2: stiftartiges Zentrierstück
- 3: eine Formhalbschale
- 3a: Auflagefläche der einen Formhalbschale
- 4: wannenartiges Zentrierstück
- 6: andere Formhalbschale
- 6a: Auflagefläche der anderen Formhalbschale

- 7: konische Spitze
- 8: Spalt
- 9: Kanalprofile

- 30: Klebelippenform
- 30a: Auflagefläche
- 31: weiteres Zentrierstück
- 33: Magneten

- 40: Rotorblattnase
- 41: Klebelinie
- 42: Außenhaut
- 43: eine Rotorblatthalbschale

- 46: andere Rotorblatthalbschale
- 47: Klebelippe

- L: Längsrichtung

## Patentansprüche

1. Fertigungsform eines Rotorblattes einer Windenergieanlage
mit einer Formhalbschale (3) und
einer anderen Formhalbschale (6) und
mindestens einer Zentriereinrichtung (1) mit einem Zentrierstück (2) und einem korrespondierenden Zentrierstück (4), von denen das eine Zentrierstück (2) an der einen Formhalbschale (3) und das korrespondierende Zentrierstück (4) an der anderen Formhalbschale (6) oder umgekehrt angeordnet sind, und
einer Klebelippenform (30) mit einem weiteren Zentrierstück (31), das während der Fertigung einer Rotorblatthalbschale (43, 46) an der einen Formhalbschale (3) zeitweise angeordnet ist, und dabei wirken das weitere Zentrierstück (31) und das korrespondierende Zentrierstück (4) zusammen.

2. Fertigungsform nach Anspruch 1,
**dadurch gekennzeichnet, dass** die Klebelippenform (30) eine Auflagefläche der einen Formhalbschale (3) in eine Richtung vergrößert, in der die andere Formhalbschale (6) bei aufeinandergeklappten Formhalbschalen (3, 6) angeordnet ist.

3. Fertigungsform nach Anspruch 1 oder 2,
**dadurch gekennzeichnet, dass** die Klebelippenform (30) unmittelbar am Formhalbschalenrand (6b) der anderen Formhalbschale (6) nach innen in die andere Formhalbschale (6) hinein versetzt angeordnet ist.

4. Fertigungsform nach einem der Ansprüche 1, 2 oder 3,
**dadurch gekennzeichnet, dass** die Klebelippenform (30) an einem dem Formhalbschalenrand (6b) abgewandten Ende wenigstens einen Magneten (33) zur Fixierung an der anderen Formhalbschale (6) aufweist.

5. Fertigungsform nach einem der Ansprüche 1 bis 4,
**dadurch gekennzeichnet, dass** die eine Formhalbschale (3) eine druckseitige Formhalbschale und die andere Formhalbschale (6) eine saugseitige Formhalbschale ist.

6. Fertigungsform nach einem der vorstehenden Ansprüche,
**dadurch gekennzeichnet, dass** das korrespondierende Zentrierstück (4) wannenförmig ausgebildet ist und das Zentrierstück (2) stiftförmig ausgebildet ist.

7. Verfahren zur Fertigung eins Rotorblattes einer Windenergieanlage, indem eine Formhalbschale (3) und eine andere Formhalbschale (6) und
mindestens eine Zentriereinrichtung (1) mit einem Zentrierstück (2) und einem korrespondierenden Zentrierstück (4), von denen das eine Zentrierstück (2) an der einen Formhalbschale (3) und das korrespondierende Zentrierstück (4) an der anderen Formhalbschale (6) oder umgekehrt angeordnet sind, zur Verfügung gestellt wird, eine Klebelippenform (30) mit einem weiteren Zentrierstück (31) an dem korrespondierenden Zentrierstück (4) der wenigstens einen Zentriereinrichtung (1) angeordnet wird,
eine andere Rotorblatthalbschale (46) in der anderen Formhalbschale (6) mit einer Klebelippe (47) gefertigt wird,
eine Rotorblatthalbschale (43) in der einen Formhalbschale (3) gefertigt wird und die Klebelippenform (30) entfernt wird und die beiden Formhalbschalen (3, 6) zusammengefügt werden und die Klebelippe (47) der anderen Rotorblatthalbschale (46) innen hinter die eine Rotorblatthalbschale (43) greift.

8. Verfahren nach Anspruch 7,
**dadurch gekennzeichnet, dass** entlang einer Nase (40) der anderen Rotorblatthalbschale (46) die Klebelippe (47) gefertigt wird, die am anderen Rotorblatthalbschalenrand nach innen versetzt angeordnet wird und die Nase (40) der Rotorblatthalbschale (43) hintergreift und ein Rotorblatthalbschalenrand der Rotorblatthalbschale (43) und ein Rotorblatthalbschalenrand der anderen Rotorblatthalbschale (46) entlang der Nase (40) unmittelbar nebeneinander angeordnet werden.

9. Verfahren nach Anspruch 7 oder 8,
**dadurch gekennzeichnet, dass** Schalenlagen beider Rotorblatthalbschalen (43, 46) an der Nase (40) zu einer Trennebene hin versetzt gelegt werden.

10. Verfahren nach Anspruch 7 bis 9,
**dadurch gekennzeichnet, dass** die Klebelippenform (30) mit dem Zentrierstück (2), das stiftartig ausgebildet ist, in das korrespondierende Zentrierstück (4), das wannenförmig ausgebildet ist, eingebracht wird und mit Magneten (33) an der anderen Formhalbschale (6) zusätzlich befestigt wird.

11. Verfahren nach einem der Ansprüche 7 bis 10,
**dadurch gekennzeichnet, dass** die eine Formhalbschale (3) und die andere Formhalbschale (6) zusammengefügt werden und dabei die Zentrierstücke (2) und die korrespondierenden Zentrierstücke (4) zusammenwirken und die Formhalbschalen (3, 6) zueinander positionieren.
